# EUROPEAN PATENT APPLICATION

(11) **EP 3 979 681 A1**
(43) Date of publication of application: **06.04.2022**
(21) Application number: 20885517.1
(22) Date of filing: 04.11.2020
(51) Int. Cl.: H04W 8/18

(54) **METHOD AND APPARATUS FOR SUPPORTING SESSION AND SERVICE CONTINUITY MODE SELECTION**

(30) Priority: 04.11.2019 CN 201911066326
(71) Applicant: ZTE Corporation, Shenzhen, Guangdong 518057 (CN)
(72) Inventor: TANG, Weijie, Shenzhen, Guangdong 518057 (CN)
(74) Representative: Raynor, Simon Mark
(86) International application number: PCT/CN2020/126571
(87) International publication number: WO 2021/088894

(57) **Abstract**

Provided in embodiments of the present disclosure are a method and an apparatus for selecting a session and service continuity mode. The method includes: a first network element acquires a session and service continuity mode supported by a user equipment when the user equipment establishes a first session of a first network; the first network element acquires subscription information of the user equipment for a second network in a process of switching the user equipment from the first network to the second network, the subscription information including a session and service continuity mode subscribed by the user equipment; and the first network element determines a session and service continuity mode to be used by the user equipment after switching to the second network according to the session and service continuity mode supported by the user equipment, the subscription information and a local policy.

## Description

### CROSS REFERENCE TO RELATED APPLICATIONS

The present application is filed based on Chinese patent application No. 201911066326.3, filed on November 4, 2019, and claims priority to the Chinese patent application. The entire contents of the Chinese patent application are hereby incorporated by reference in its entirety.

### TECHNICAL FIELD

The present disclosure relates to the field of communication technology, in particular to a method and an apparatus for selecting a session and service continuity mode.

### BACKGROUND

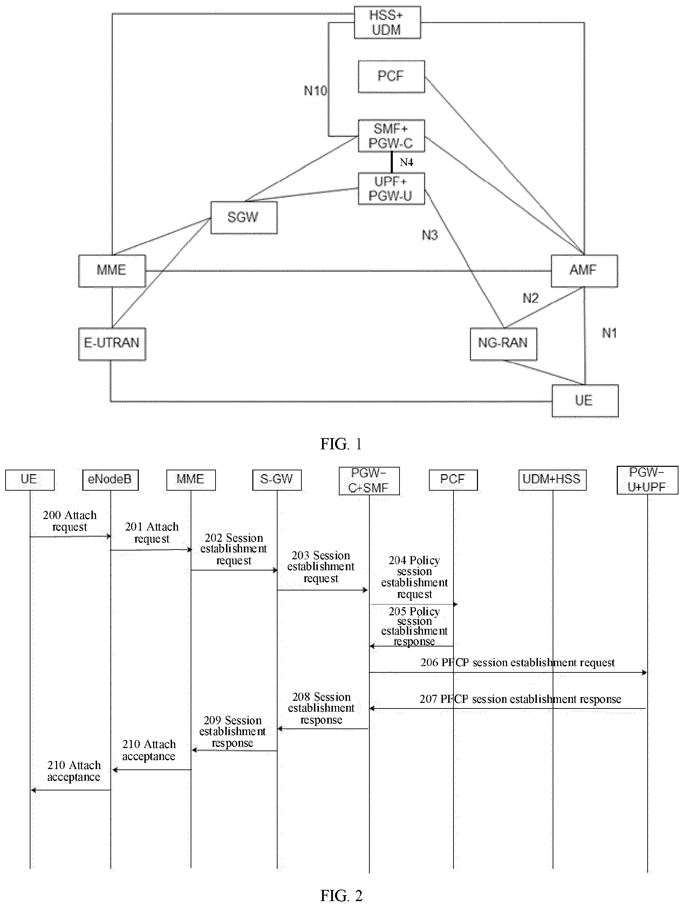

In the communication system architecture shown in FIG. 1, an evolved packet system (EPS) and a 5th-generation system (5GS) may be switched with each other.

With regard to the EPS, a user equipment (UE) is connected to a mobility management entity (MME) through an evolved UMTS (universal mobile telecommunications system) terrestrial radio access network (E-UTRAN).

The EPS includes the following network elements: the E-URTAN, the MME, a serving gateway (SGW), a session management function (SMF) + PDN (packet data network) gateway control (PGW-C), a user plane function (UPF) + PDN (packet data network) gateway user (PGW-U), a home subscriber server (HSS) + unified data management (UDM). Herein, the HSS+UDM is a combination of HSS and UDM functions, the SMF+PGW-C is a combination of SMF and PGW-C functions, and the UPF+PGW-U is a combination of UPF and PGW-U functions. The EPS actually includes the PGW-C in the SMF+PGW-C, the PGW-U in the UPF+PGW-U, and the UDM in the HSS+UDM.

With regard to the 5GS, UE is connected to an access management function (AMF) through an NG and radio access network (NG-RAN). The interface between the UE and the AMF is an N1 interface. The interface between the NG-RAN and the AMF is an N2 interface. The interface between the NG-RAN and the UPF+PGW-U is an N3 interface. The interface between the SMF+PGW-C and the HSS+UDM is an N10 interface. The interface between the SMF+PGW-C and the UPF+PGW-U is an N4 interface. The 5GS actually includes the SMF in the SMF+PGW-C, the UPF in the UPF+PGW-U, and the HSS in the HSS+UDM.

In the process of establishing an EPS session, the UE may carry a PDU Session ID in an attach request message to a network side. The PDU Session ID indicates that the UE supports the 5GS, and it also indicates that the current session may be switched to the 5GS in later. When the session is established on the network side, certain pre-switch processing may be performed, such as establishing QoS (quality of service) rule mapping, QoS flow descriptions and other information.

As shown in FIG. 2, the EPS session establishment process may include the following steps.

In step 200, the UE initiates an attach request to an evolved node B (eNodeB), which carries a PDU Session ID.

In step 201, the eNodeB selects an MME, and initiates an attach request to the MME, which carries PDU Session ID information.

In step 202, the MME selects a SGW and a PGW-C+SMF, and initiates a session establishment request to the SGW, which carries the PDU Session ID information.

In step 203, the SGW allocates relevant tunnel resources, establishes a session, and sends the session establishment request to the PGW-C+SMF, which carries the PDU Session ID information.

In step 204, the PGW-C+SMF serves as the PGW-C to create resources related to the 4th Generation mobile communication technology (4G), preform a pre-switch processing for switching the current session to the 5GS later according to a switching instruction carried in an indication in a session establishment request message, convert relevant parameters according to relevant information in the PDU Session ID and international mobile subscriber identity (IMSI), and send a policy session establishment request to a policy control function (PCF).

In step 205, the PCF establishes resources related to a policy session, and sends to the PGW-C+SMF a response that the session is successfully established.

In step 206, the PGW-C+SMF selects the UPF and sends a packet forwarding control protocol (PFCP) session establishment request message to the UPF.

In step 207, the UPF establishes a PFCP session resource and sends to the PGW-C+SMF a response that the PFCP session is successfully established.

In step 208, the PGW-C+SMF replies to the SGW with a session establishment response, which carries resource information allocated by the PGW-C and QoS Rule, aggregate maximum bit rate (AMBR), network slice selection assistance information (NSSAI), QoS flow descriptions and other information.

In step 209, the SGW replies to the MME with the session establishment response, which carries the resource information allocated by the SGW and the PGW-C, the QoS Rule, the AMBR, the NSSAI, the QoS flow descriptions and other information.

In step 210, after receiving the session establishment response, the MME sends an attach acceptance response to the eNodeB.

In step 211, the eNodeB transparently transmits the attach acceptance response to the UE, and a UE session establishment is completed.

In the communication system supporting mutual switching between the EPS and the 5GS shown in FIG. 1, the UE switches from an EPS session to a 5GS protocol data unit (PDU) session.

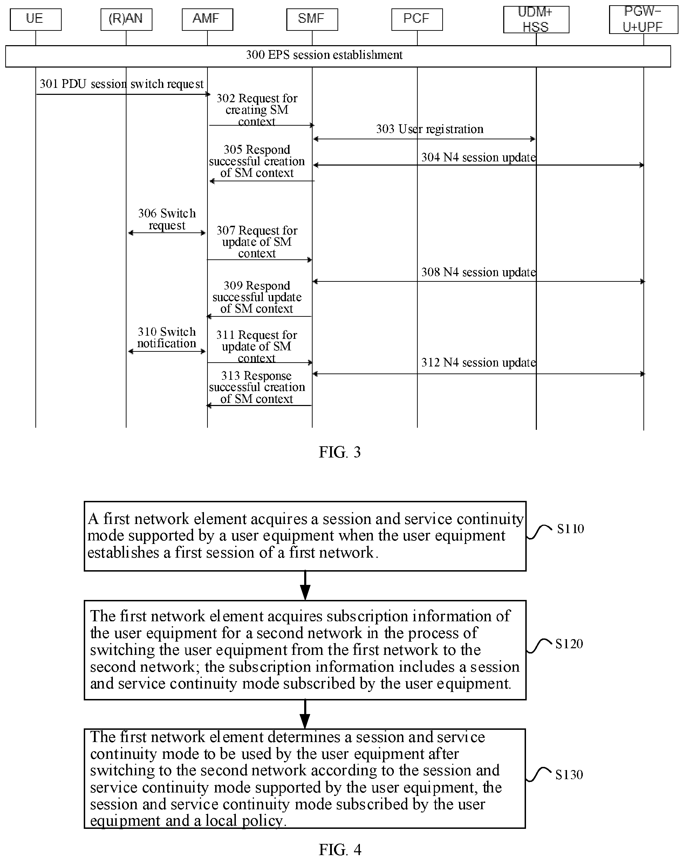

As shown in FIG. 3, the process of switching from the EPS session to the 5GS PDU session may include the following steps.

In step 300, the UE initiates an EPS session establishment, and indicates that the switching is supported when the session is established.

In step 301, due to changes in UE location or signal strength, it is required to switch the UE to the 5GS network and initiate a switch request from the EPS to the 5GS.

In step 302, the AMF initiates to the SMF a request for creating session management (SM) context, and the SMF performs a resource switching conversion.

In step 303, the SMF initiates a 5GS registration request to the UDM+HSS. The UDM+HSS processes the registration request and replies with a registration success response.

In step 304, the SMF interacts with the PGW-U+UPF, initiates an N4 interface update message, and creates user tunnel information of the 5GS session.

In step 305, the SMF sends to the AMF a response message to the creation of SM context, which carries N3 tunnel information of the UPF.

In step 306, the AMF interacts with a (R)AN for the switch request from the EPS to the 5GS, and transmits relevant information.

In step 307, the AMF initiates to the SMF a request for updating SM context, which carries N3 tunnel information of the (R)AN.

In step 308, the SMF interacts with the PGW-U+UPF, and initiates an N4 interface updating message to update the user tunnel information of the 5GS session.

In step 309, the SMF sends to the AMF a response message to the updating of SM context, and the PDU session update is successful.

In step 310, after the preparation for the switching between the UE and the (R)AN is completed, the (R)AN initiates a switch notification to the AMF.

In step 311, AMF initiates the request for updating SM context to the SMF, which carries switching completion identification information.

In step 312, the SMF interacts with the PGW-U+UPF, and initiates the N4 interface update message to update the N3 user tunnel information of the 5GS session (R)AN.

In step 313, the SMF sends to the AMF a response message to the creation of SM context, and the PDU session switching is completed.

In the 5GS, in order to meet the demand of PDU session continuity, three session and service continuity modes (SSC Mode) are defined, which are an SSC mode 1, an SSC mode 2 and an SSC mode 3.

With regard to a PDU session of the SSC mode 1, regardless of the access technology (e.g., access type and cell) continuously used by the UE to access the network, the UPF serving as a PDU session anchor when the PDU session is established may be maintained.

With regard to a PDU session of the SSC mode 2, if the PDU session of the SSC mode 2 has a single PDU session anchor, the network may trigger the release of the PDU session and instruct the UE to immediately establish a new PDU session to the same data network.

With regard to a PDU session of the SSC mode 3, the network allows a UE connection to the same data network to be established through a new PDU session anchor before releasing the connection between the UE and the previous PDU session anchor.

The above communication system supporting mutual switching between the EPS and the 5GS does not support SSC mode selection, so it is unable to fulfill session and service continuity in 5GS architecture, and thus it is unable to meet various continuity requirements of different applications/services of the UE.

### SUMMARY

Some embodiments of the present disclosure provide a method and an apparatus for selecting a session and service continuity mode.

Some embodiments of the present disclosure provide a method for selecting a session and service continuity mode, including: acquiring, by a first network element, a session and service continuity mode supported by a user equipment when the user equipment establishes a first session of a first network; acquiring, by the first network element, subscription information of the user equipment for a second network in a process of switching the user equipment from the first network to the second network, the subscription information comprising a session and service continuity mode subscribed by the user equipment; and determining, by the first network element, a session and service continuity mode to be used by the user equipment after switching to the second network, according to the session and service continuity mode supported by the user equipment, the session and service continuity mode subscribed by the user equipment and a local policy.

Some embodiments of the present disclosure provide an apparatus for selecting a session and service continuity mode, applied to a first network element, including: a first information acquisition module configured to acquire a session and service continuity mode supported by a user equipment when the user equipment establishes a first session of a first network; a second information acquisition module configured to acquire subscription information of the user equipment for a second network in a process of switching the user equipment from the first network to the second network, the subscription information comprising a session and service continuity mode subscribed by the user equipment; and a decision module configured to determine a session and service continuity mode to be used by the user equipment after switching to the second network, according to the session and service continuity mode supported by the user equipment, the session and service continuity mode subscribed by the user equipment and a local policy.

Some embodiments of the present disclosure provide an apparatus for selecting a session and service continuity mode, including: a memory, a processor and a program for selecting a session and service continuity mode stored on the memory and operable on the processor. When the program for selecting a session and service continuity mode is executed by the processor, the steps of the above-described method for selecting a session and service continuity mode are implemented.

Some embodiments of the present disclosure provide a computer-readable storage medium on which a program for selecting a session and service continuity mode is stored. When the program for selecting a session and service continuity mode is executed by a processor, the steps of the above-described method for selecting a session and service continuity mode are implemented.

### BRIEF DESCRIPTION OF THE DRAWINGS

FIG. 1 is an architecture diagram illustrating a communication system supporting a mutual switching between an EPS and a 5GS in related art.
FIG. 2 is a schematic diagram illustrating an information interaction for establishing an EPS session in the communication system supporting the mutual switching between the EPS and the 5GS in related art.
FIG. 3 is a schematic diagram illustrating an information interaction for switching from the EPS session to a 5GS PDU session in the communication system supporting the mutual switching between the EPS and the 5GS in the related art.
FIG. 4 is a flowchart illustrating a method for selecting a session and service continuity mode selection according to an embodiment of the present disclosure.
FIG. 5 is a schematic diagram illustrating an apparatus for selecting a session and service continuity mode according to an embodiment of the present disclosure.
FIG. 6 is a schematic diagram illustrating an information interaction when performing a method for selecting a session and service continuity mode according to an embodiment of the present disclosure.
FIG. 7 is a schematic diagram illustrating an information interaction when performing another method for selecting a session and service continuity mode according to an embodiment of the present disclosure.
FIG. 8 is a schematic diagram of an information interaction when performing yet another method for selecting a session and service continuity mode according to an embodiment of the present disclosure.
FIG. 9 is a schematic diagram of an information interaction when performing still another method for selecting a session and service continuity mode according to an embodiment of the present disclosure.
FIG. 10 is a schematic diagram of an information interaction when performing still a further method for selecting a session and service continuity mode according to an embodiment of the present disclosure.

### DETAILED DESCRIPTION

The embodiments of the present disclosure may be described in detail below with reference to the accompanying drawings in order to make the objectives, technical solutions and advantages of the present disclosure clearer. It should be noted that the embodiments in the present disclosure and the features in the embodiments may be combined with each other to derive other embodiments not explicitly described.

The steps shown in the flowcharts of the accompanying drawings may be executed in a computer system, such as a set of computer-executable instructions. Although a logical order is shown in the flowchart, in some cases, the steps shown or described may be executed in a different order than here.

Some embodiments of the present disclosure provide a method and an apparatus for selecting a session and service continuity mode, which can support a session and service continuity mode selection in a communication system supporting two kinds of network switching and meet various continuity requirements of different applications/services.

### Embodiment 1

As shown in FIG. 4, some embodiments of the present disclosure provide a method for selecting a session and service continuity mode, which includes the following steps.

In step S110, a first network element acquires a session and service continuity mode supported by a user equipment when the user equipment establishes a first session of a first network.

In step S120, the first network element acquires subscription information of the user equipment for a second network when the user equipment is switched from the first network to the second network. The subscription information includes a session and service continuity mode subscribed by the user equipment.

In step S130, the first network element determines a session and service continuity mode to be used by the user equipment after switching to the second network, according to the session and service continuity mode supported by the user equipment, the session and service continuity mode subscribed by the user equipment and a local policy.

In an implementation, the method further includes initiating, by the first network element, session update interaction with the second network to the user equipment, and informing the user equipment of the session and service continuity mode to be used by the user equipment after switching to the second network during the update interaction.

In an implementation, the first network is an evolved packet core system (EPS) network, and the second network is a 5th-generation mobile communication technology system (5GS) network.

The first network element supports a packet data network gateway control (PGW-C) function in the first network and supports a session management function (SMF) in the second network.

In an implementation, the first network element acquiring the session and service continuity mode supported by the user equipment when the user equipment establishes the first session of the first network includes the following step.

The first network element receives a request for establishing the first session of the first network sent by a mobility management entity (MME) through a serving gateway (SGW). The request for establishing the first session carries information on the session and service continuity mode supported by the user equipment.

Herein, the MME receives an attach request sent by the user equipment through an eNodeB, wherein the attach request carries the session and service continuity mode information supported by the user equipment.

In an implementation, the first network element acquiring the subscription information of the user equipment for the second network includes the following steps: the first network element sends a request for acquiring the subscription information of the user equipment for the second network to a second network element; the first network element receives the subscription information of the user equipment for the second network replied by the second network element.

Herein, the second network element supports a unified data management function (UDM) and a home subscriber server function (HSS).

In an implementation, the first network element initiating the session update interaction with the second network to the user equipment includes the following step: the first network element sends a request message for N1 session update of the second network to the user equipment through an access management function AMF. The request message for N1 session update carries the session and service continuity mode information determined by the first network element and to be used by the user equipment after switching to the second network.

Herein, after receiving the request message for N1 session update, the user equipment may store the session and service continuity mode information to be used by the user equipment after switching to the second network. The session and service continuity mode information is applied to related processing flows involving the session and service continuity mode in the second network.

Herein, when determining the session and service continuity mode used by the user equipment after switching to the second network, the first network element may select one from the session and service continuity modes supported by the user equipment carried in the attach request when the user equipment establishes the EPS session. For example, the user equipment may support all session and service continuity modes, and the first network element may select one of the modes supported by the user equipment.

In an implementation, the local policy may include at least one of the following:
selecting the session and service continuity mode when the user equipment is in the second network by referring to a session and service continuity mode supported by a local deployment number segment of a session management function (SMF); and
selecting the session and service continuity mode when the user equipment is in the second network by referring to a session and service continuity mode supported by a data network name (DNN) carried by the user equipment during accessing.

Herein, the DNN may be a DNN carried by the user when accessing the first network or may be a DNN carried by the user when accessing the second network. Generally speaking, the DNNs corresponding to the first network and the second network are the same.

### Embodiment 2

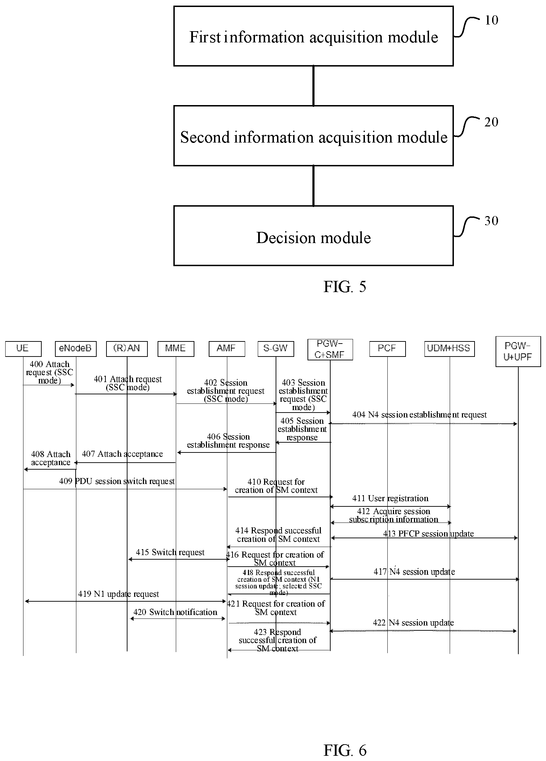

As shown in FIG. 5, some embodiments of the present disclosure provide an apparatus for selecting a session and service continuity mode, which is applied to a first network element. The apparatus includes the following modules.

A first information acquisition module 10 is configured to acquire a session and service continuity mode supported by a user equipment when the user equipment establishes a first session of a first network.

A second information acquisition module 20 is configured to acquire subscription information of the user equipment for a second network in a process of switching the user equipment from the first network to the second network, where, the subscription information includes a session and service continuity mode subscribed by the user equipment.

A decision module 30 is configured to determine a session and service continuity mode to be used by the user equipment after switching to the second network, according to the session and service continuity mode supported by the user equipment, the session and service continuity mode subscribed by the user equipment and a local policy.

In an implementation, the apparatus further includes an update module 40.

The update module is configured to initiate a session and service continuity mode to be used by the user equipment after switching to the second network, according to the session and service continuity mode supported by the user equipment, the session and service continuity mode subscribed by the user equipment and a local policy.

In an implementation, the first network is an evolved packet core system (EPS) network, and the second network is a 5th-generation mobile communication technology system (5GS) network.

The first network element supports a packet data network gateway control (PGW-C) function in the first network and supports a session management function (SMF) in the second network.

In an implementation, the first information acquisition module is configured to acquire the session and service continuity mode supported by the user equipment when the user equipment establishes the first session of the first network in the following manner.

The first information acquisition module receives a request for establishing the first session of the first network sent by a mobility management entity (MME) through a serving gateway (SGW). The first session establishment request carries session and service continuity mode information supported by the user equipment.

Herein, the MME receives an attach request sent by the user equipment through an evolved node B (eNodeB). The attach request carries the session and service continuity mode information supported by the user equipment.

In an implementation, the second information acquisition module is configured to acquire the subscription information of the user equipment for the second network in the following manner.

The second information acquisition module sends a request for acquiring the subscription information of the user equipment for the second network to the second network element.

The second information acquisition module receives the subscription information of the user equipment for the second network replied by the second network element.

Herein, the second network element supports a unified data management function (UDM) and a home subscriber server function (HSS).

In an implementation, the update module is configured to initiate the session update interaction of the second network to the user equipment in the following manner.

The update module sends a request message for N1 session update of the second network to the user equipment through an access management function AMF, wherein, the request message for N1 session update carries the session and service continuity mode information determined by the first network element and to be used by the user equipment after switching to the second network.

### Embodiment 3

Some embodiments of the present disclosure provide an apparatus for selecting a session and service continuity mode, which includes a memory, a processor and a program for a selecting a session and service continuity mode stored on the memory and operable on the processor. When the program for selecting the session and service continuity mode is executed by the processor, the steps of the method for selecting the session and service continuity mode in the Embodiment 1 are implemented.

### Embodiment 4

Some embodiments of the present disclosure provide a computer-readable storage medium on which a program for selecting a session and service continuity mode is stored. When the program for selecting the session and service continuity mode is executed by a processor, the steps of the method for selecting a session and service continuity mode in the Embodiment 1 are implemented.

### Example 1

In this example, the communication system and the UE support the mutual switching between the EPS and the 5GS. The UE carries supported SSC modes is carried in an attach request sent from UE to a PGW-C+SMF. After receiving the attach request, the PGW-C+SMF stores the SSC mode in a context. When the UE initiates the switching from the EPS to the 5GS, the PGW-C+SMF acquires user session subscription data (including the SSC mode) from the UDM and decides the SSC mode to be finally used. In the preparation stage for switching, an interaction for N1 session update message is added between the AMF and the UE to provide the selected SSC Mode to the UE.

As shown in FIG. 6, a method for selecting a session and service continuity mode may include the following steps.

In step 400, the UE initiates to the eNodeB an attach request, which carries SSC mode information supported by the UE.

In step 401, the eNodeB selects a MME, and initiates to the MME an attach request, which carries the SSC mode information supported by the UE.

In step 402, the MME selects the SGW and the PGW-C+SMF, and initiates to the SGW a request for session establishment, where, the request carries the SSC mode information supported by the UE.

In step 403, the SGW allocates relevant tunnel resources, establishes an EPS session, and sends the request for session establishment to the PGW-C+SMF, where, the request carries the SSC mode information supported by the UE.

In step 404, the PGW-C+SMF serves as the PGW-C to create resources related to the EPS session; preforms a pre-switch processing according to a switching instruction carried in an indication in a session establishment request message, where the related parameters are mutually converted; and stores the SSC mode supported by the UE.

The PGW-C+SMF selects a UPF and sends a PFCP (packet forwarding control protocol) session establishment request message to the UPF. The UPF establishes PFCP session resources and sends to the PGW-C+SMF a response indicating that the PFCP session is established successfully.

In step 405, the PGW-C+SMF replies to the SGW with a session establishment response, which carries resource information allocated by the PGW-C and QoS Rule, aggregate maximum bit rate (AMBR), network slice selection assistance information (NSSAI), QoS flow descriptions and other information.

In step 406, the SGW replies to the MME with the session establishment response, which carries the resource information allocated by the SGW and the PGW-C, the QoS Rule, the AMBR, the NSSAI, the QoS flow descriptions and other information.

In step 407, after receiving the session establishment response, the MME sends an attach acceptance response to the eNodeB.

In step 408, the eNodeB transparently transmits the attach acceptance response to the UE, which carries information such as the QoS Rule, the AMBR, the NSSAI, the QoS flow descriptions and the SSC mode. A UE session establishment is completed.

In step 409, due to UE location movement or changes in signal strength, it is required to switch the UE to the 5GS network and thus initiate a request for switching from the EPS to the 5GS.

In step 410, the AMF initiates a request for creating SM context to the SMF, and the SMF performs a resource switching conversion.

In step 411, the SMF initiates a 5GS registration request to the UDM+HSS. The UDM+HSS processes the registration request and replies with a response indication that the registration is successful.

In step 412, the SMF initiates to the UDM+HSS a request for acquiring 5GS session subscription information. The UDM+HSS replies with subscription information (including SSC mode information).

The PGW-C+SMF selects an SSC mode selected for the 5GS session based on UE capability, UDM subscription and a local configuration policy.

In step 413, the SMF interacts with a PGW-U+UPF, initiates a PFCP session update message, and establishes user tunnel information of the 5GS session.

In step 414, the SMF sends a response message for creating the SM context to the AMF, which carries N3 tunnel information of the UPF.

In step 415, the AMF interacts with a (R)AN for the switch request from the EPS session to the 5GS session, and transmits relevant information.

In step 416, the AMF initiates to the SMF a request for updating the SM context, which carries N3 tunnel information of the (R)AN.

In step 417, the SMF interacts with the PGW-U+UPF, and initiates a message for updating N4 interface to update the user tunnel information of the 5GS session.

In step 418, the SMF sends a response message for updating the SM context, and a PDU session is successfully updated. The response message includes a request message for N1 session update, and the request message for N1 session update carries the SSC mode information selected by the SMF

In step 419, the AMF receives the request for N1 session update and sends request for N1 session update to the UE, which carries the SSC mode selected by the SMF.

In step 420, after the preparation for the switching between the UE and the (R)AN is completed, the (R)AN initiates a switch notification to the AMF.

In step 421, AMF initiates to the SMF a request for updating SM context, which carries switching completion identification information.

In step 422, the SMF interacts with the PGW-U+UPF, and initiates a message for updating the N4 interface to update the N3 user tunnel information of the 5GS session (R)AN.

In step 423, the SMF sends a response message for updating SM context to the AMF, and the PDU session switching is completed.

### Example 2

In this example, the communication system and the UE support the mutual switching between the EPS and the 5GS. The UE carries an SSC mode 1 when accessing the EPS session accesses. During the switching to the 5GS, UDM subscription information is acquired to allow the SSC mode 1 to access. The SSC mode 1 is finally selected for the switched 5GS session. When the SMF carries out a UPF reselection, the mode of the SSC mode 1 is executed after a new UPF is selected. A UPF anchor remains unchanged, and an uplink classifier (UL CL) is added for spliting the UPF.

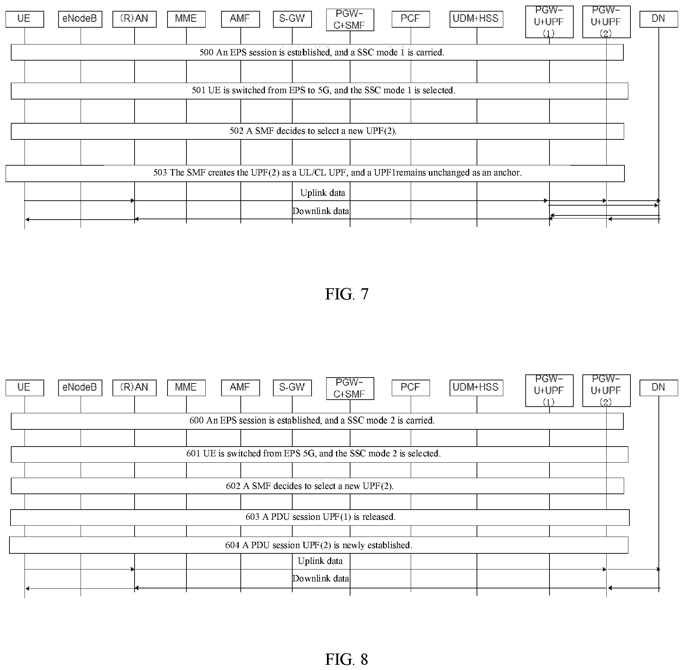

As shown in FIG. 7, a method for selecting a session and service continuity mode may include the following steps.

In step 500, the UE initiates an EPS session establishment. The SSC mode (SSC mode 1) supported by the UE is carried in an initial attach message and a session establishment message. The PGW-C+SMF saves the messages.

In step 501, due to UE location movement or changes in signal strength, it is required to switch the UE to the 5GS network and initiate the switching from the EPS to the 5GS. During the switching, the PGW-C+SMF acquires the subscribed SSC mode (SSC mode 1) of the user equipment from the UDM+HSS. The 5GS session is decided to select the SSC mode 1 through a policy judgment, and the switching is successful.

In step 502, due to the scenarios described in the protocol, such as the UE location movement, a service change or an application function (AF) change, the SMF decides that the UPF reselection is required. The UPF changes during the reselection, and a new UPF2 is selected (the old UPF is a UPF1).

In step 503, the SMF performs operations according to the SSC mode 1. The anchor of the UPF1 remains unchanged, and the UPF2 is established as a split UPF of the UL CL. An N9 tunnel is established between the UPF2 and the UPF1 to realize the split.

In the end, an uplink message and a downlink message may be split by the UPF2, and both the UPF2 and the UPF1 may have messages to a data network (DN).

### Example 3

In this example, the communication system and the UE support the mutual switching between the EPS and the 5GS. The UE carries an SSC mode 2 when accessing the EPS session accesses. During the switching to the 5GS, UDM subscription information is acquired to allow the SSC mode 2 to access. The SSC mode 2 is finally selected for the switched 5GS session. When the SMF carries out a UPF reselection, the mode of the SSC mode 2 is executed after a new UPF is selected. The existing PDU session is released first, and then a new PDU session establishment is initiated.

As shown in FIG. 8, a method for selecting a session and service continuity mode may include the following steps.

In step 600, the UE initiates the EPS session establishment. The SSC mode (SSC mode 2) supported by the UE is carried in an initial attach message and a session establishment message. The PGW-C+SMF saves the messages.

In step 601, due to the UE location movement or changes in signal strength, it is required to switch the UE to the 5GS network and initiate the switching from the EPS to the 5GS. During the switching, the PGW-C+SMF acquires the subscribed SSC mode (which allows the SSC mode 2) of the user from the UDM+HSS. The 5GS session is decided to select the SSC mode 2 through the policy judgment, and the switching is successful.

In step 602, due to the scenarios described in the protocol, such as the UE location movement, the service change or the AF change, the SMF decides that the UPF reselection is required. The UPF changes during the reselection, and the new UPF2 is selected.

In step 603, the SMF performs operations according to the SSC mode 2, and notifies to release the existing PDU session first, and then establish a new PDU session. The UE releases the existing session.

In step 604, the UE initiates a new PDU session establishment.

In the end, both the uplink message and the downlink message may pass through the UPF2 to the DN.

### Example 4

In this example, the communication system and the UE support the mutual switching between the EPS and the 5GS. The UE carries an SSC mode 3 when accessing the EPS session accesses. During the switching to the 5GS, UDM subscription information is acquired to allow the SSC mode 3 to access. The SSC mode 3 is finally selected for the switched 5GS session. When the SMF carries out a UPF reselection, the mode of the SSC mode 3 is executed after a new UPF is selected. The new PDU session establishment is initiated first, and then the existing PDU session is released.

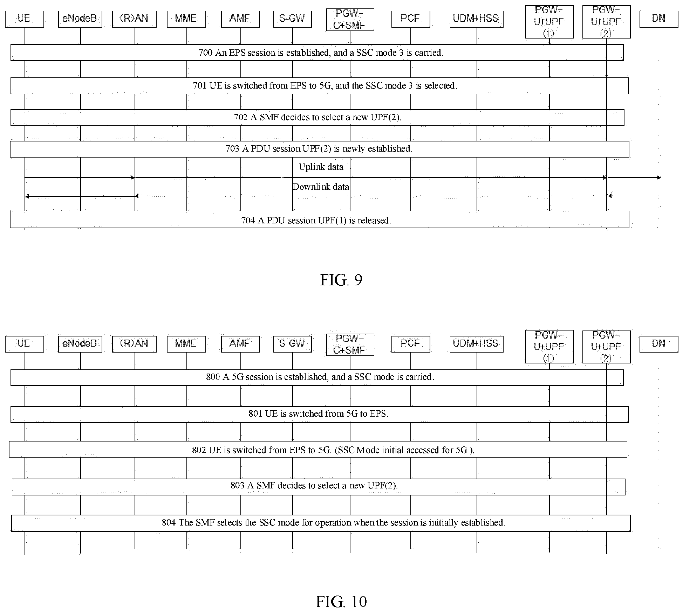

As shown in FIG. 9, a method for selecting a session and service continuity mode may include the following steps.

In step 700, the UE initiates the EPS session establishment. The SSC mode (SSC mode 3) supported by the UE is carried in the initial attach message and the session establishment message. The PGW-C+SMF saves the messages.

In step 701, due to the UE location movement or changes in signal strength, it is required to switch the UE to the 5GS network and initiate the switching from the EPS to the 5GS. During the switching, the PGW-C+SMF acquires the subscribed SSC mode (which allows the SSC mode 3) of the user from the UDM+HSS. The 5GS session is decided to select the SSC mode 3 through the policy judgment, and the switching is successful.

In step 702, due to the scenarios described in the protocol, such as the UE location movement, the service change or the AF change, the SMF decides that the UPF reselection is required. The UPF changes during the reselection, and the new UPF2 is selected.

In step 703, the SMF performs operations according to the SSC mode 3, and notifies to establish the new PDU session first, and then release the existing PDU session. The UE initiates new PDU session establishment.

At this time, both the uplink message and the downlink message may pass through the UPF2 to the DN.

In step 704, the UE or the SMF initiates the release of the old PDU session.

### Example 5

In this example, the communication system and the UE support the mutual switching between the EPS and the 5GS. When a 5GS PDU session is accessed, the UE selects an SSC mode (initial SSC mode) according to the UE's capability and the local configuration policy. After switching to the EPS first and then back to the 5GS, an initial 5GS access mode is used as the SSC mode selected for the 5GS session. The SMF may correctly execute the SSC mode selected during the session establishment when carrying out the UPF reselection and selecting the new UPF.

As shown in FIG. 10, a method for selecting a session and service continuity mode may include the following steps.

In step 800, the UE initiates the PDU session establishment. When the session is established, the SMF selects an SSC mode (original SSC mode) according to the SSC mode supported by the UE, a subscription mode issued by the UDM, and the local configuration policy.

In step 801, due to the UE location movement or change in signal strength, the UE needs to be switched to the EPS network and initiates a switching from the 5GS to the EPS, and the switching is successful.

In step 802, due to the UE location movement or change in signal strength, the UE needs to be switched to the 5GS network and initiate a switching from the EPS to the 5GS. The selected SSC mode remains unchanged, and the switching is successful.

In step 803, due to the scenarios described in the protocol, such as the UE location movement, the service change or the AF change, the SMF decides that the UPF reselection is required. The UPF changes during the reselection, and the new UPF2 is selected.

In step 804, the SMF may perform operations according to the SSC mode selected when the session is established. The SSC mode 1 refers to the description in the example 2, the SSC mode 2 refers to the description in the example 3 and the SSC mode 3 refers to the description in the example 4, so as to ensure smooth service.

Compared with the related art, in the method and the apparatus for selecting a session and service continuity mode provided by the embodiments of the present disclosure, the first network element acquires a session and service continuity mode supported by a user equipment when the user equipment establishes a first session of a first network. The first network element acquires subscription information of the user equipment for a second network in the process of switching the user equipment from the first network to the second network, where the subscription information includes a session and service continuity mode subscribed by the user equipment. The first network element determines a session and service continuity mode to be used by the user equipment after switching to the second network according to the session and service continuity mode supported by the user equipment, the session and service continuity mode subscribed by the user equipment and the local policy. The technical schemes of the embodiments of the present disclosure can support the session and service continuity mode selection in the communication systems supporting two kinds of network switching, and meet various continuity requirements of different applications/services.

Those having ordinary skill in the art shall understand that all or some of the steps in the method disclosed above and the functional modules/units in the system and the apparatus can be implemented as software, firmware, hardware and an appropriate combination thereof. In the hardware implementation, division between functional modules/units mentioned in the above description does not necessarily correspond to division of physical components. For example, one physical component may have multiple functions, or one function or step may by implemented by several physical components. Some physical components or all physical components may be implemented as software executed by a processor, such as a central processing unit, a digital signal processor, or a microprocessor, or may be implemented as hardware, or may be implemented as an integrated circuit, for example, an application specific integrated circuit. Such software can be distributed on a computer-readable medium, which can include a computer storage medium (or non-transitory medium) and a communication medium (or transitory medium). As well known to those having ordinary skill in the art, the term computer storage medium includes a volatile or non-volatile, removable or irremovable medium implemented in any method or technology applied to storage information (such as a computer-readable instruction, a data structure, a computer program module or other data). The computer storage medium includes, but is not limited to, a random access memory (RAM), a read-only memory (ROM), an electrically erasable programmable read only memory (EEPROM), a flash memory or other memory technology, a compact disc read-only memory (CD-ROM), a digital versatile disc (DVD) or another optical disc memory, a magnetic box, a magnetic tape, a magnetic disc or another magnetic storage apparatus, or any other medium applicable to storing desired information and accessible by a computer. In addition, as is well known to those having ordinary skill in the art, the communication medium usually includes computer-readable instructions, data structures, program modules, or other data in a modulated data signal such as a carrier wave or other transmission mechanisms, and may include any information delivery medium.

It should be noted that the present disclosure can also have a variety of other embodiments. Without departing from the spirit and essence of the present disclosure, those skilled in the art can make various corresponding changes and deformations according to the present disclosure, but these corresponding changes and deformations shall fall within the protection scope of the appended claims of the present disclosure.

## Claims

1. A method for selecting a session and service continuity mode, comprising:
acquiring, by a first network element, a session and service continuity mode supported by a user equipment when the user equipment establishes a first session of a first network;
acquiring, by the first network element, subscription information of the user equipment for a second network in a process of switching the user equipment from the first network to the second network, the subscription information comprising a session and service continuity mode subscribed by the user equipment; and
determining, by the first network element, a session and service continuity mode to be used by the user equipment after switching to the second network, according to the session and service continuity mode supported by the user equipment, the session and service continuity mode subscribed by the user equipment and a local policy.

2. The method according to claim 1, further comprising:
initiating, by the first network element, a session update interaction with the second network to the user equipment, and informing the user equipment of the session and service continuity mode to be used by the user equipment after switching to the second network during the update interaction.

3. The method according to claim 1 or 2, wherein,
the first network is an evolved packet system EPS network, and the second network is a 5th-generation mobile communication technology system 5GS network; and
the first network element supports a packet data network gateway control PGW-C function in the first network and supports a session management function SMF in the second network.

4. The method according to claim 3, wherein, acquiring, by the first network element, the session and service continuity mode supported by the user equipment when the user equipment establishes the first session of the first network comprises:
receiving, by the first network element, a request for establishing the first session of the first network sent by a mobility management entity MME through a serving gateway SGW, wherein, the request for establishing the first session carries information on the session and service continuity mode supported by the user equipment;
wherein, the MME receives an attach request sent by the user equipment through an eNodeB, wherein the attach request carries the session and service continuity mode information supported by the user equipment.

5. The method according to claim 3, wherein, acquiring, by the first network element, the subscription information of the user equipment for the second network comprises:
sending, by the first network element, a request for acquiring the subscription information of the user equipment for the second network to a second network element; and
receiving, by the first network element, the subscription information of the user equipment for the second network replied by the second network element;
wherein, the second network element supports a unified data management function UDM, and a home subscriber server function HSS.

6. The method according to claim 3, wherein,
initiating, by the first network element, the session update interaction with the second network to the user equipment comprises:
sending, by the first network element, a request message for N1 session update of the second network to the user equipment through an access management function AMF, wherein, the request message for N1 session update carries the session and service continuity mode information determined by the first network element and to be used by the user equipment after switching to the second network.

7. The method according to claim 1, wherein,
the local policy comprises selecting the session and service continuity mode when the user equipment is in the second network by referring to a session and service continuity mode supported by a local deployment number segment of a session management function SMF.

8. An apparatus for selecting a session and service continuity mode, applied to a first network element, comprising:
a first information acquisition module configured to acquire a session and service continuity mode supported by a user equipment when the user equipment establishes a first session of a first network;
a second information acquisition module configured to acquire subscription information of the user equipment for a second network in a process of switching the user equipment from the first network to the second network, the subscription information comprising a session and service continuity mode subscribed by the user equipment; and
a decision module configured to determine a session and service continuity mode to be used by the user equipment after switching to the second network, according to the session and service continuity mode supported by the user equipment, the session and service continuity mode subscribed by the user equipment and a local policy.

9. An apparatus for selecting a session and service continuity mode, comprising: a memory, a processor and a program for selecting a session and service continuity mode stored on the memory and operable on the processor, wherein when the program for selecting the session and service continuity mode is executed by the processor, the steps of the method for selecting the session and service continuity mode according to any one of claims 1-7 are implemented.

10. A computer-readable storage medium storing a program for selecting a session and service continuity mode, wherein when the program for selecting a session and service continuity mode is executed by a processor, the steps of the method for selecting a session and service continuity mode according to any one of claims 1-7 are implemented.
